# EUROPEAN PATENT APPLICATION

(11) **EP 0 740 074 A2**
(43) Date of publication of application: **30.10.1996**
(21) Application number: 96102021.1
(22) Date of filing: 12.02.1996
(51) Int. Cl.: F04B 17/03

(54) **Motor-driven pump**

(30) Priority: 14.04.1995 JP 89491/95
(71) Applicant: SUMITOMO ELECTRIC INDUSTRIES, LIMITED, Osaka 541 (JP)
(72) Inventor: Takata, Koji, c/o Itami Works of Sumitomo, Itami-shi, Hyogo (JP)
(74) Representative: Schieschke, Klaus, Dipl.-Ing.

(57) **Abstract**

A power pump for use in a brake fluid pressure controller as its power source. It is provided with an economical means for reducing hammering noise. It has a pump-driving motor coupled to a pump housing and having an output shaft supported on a bearing provided outside a motor housing. In order to suppress whirling of the output shaft of the motor, which is a major cause of hammering noise, the bearing is supported on the pump housing by inserting it partially into a straight hole formed in the pump housing. This make it unnecessary to fit the bearing in the motor housing with so high accuracy, so that the recess for receiving the bearing can be formed in the front cover of the motor housing by a simple and economical method. Thus, it is possible to reduce hammering noise economically.

## Description

### BACKGROUND OF THE INVENTION

This invention relates to a motor-driven pump for feeding a liquid under pressure, particularly a pump provided with a means for suppressing noise resulting from alternating load that originates from the pump and acts on the output shaft of the motor in a direction perpendicular to the axis of the output shaft.

Many hydraulic pressure controllers for preventing lockup and slip of vehicle wheels by controlling brake fluid pressure of the vehicle include a motor-driven hydraulic pump having its plunger or pump directly coupled to the pump housing. Such conventional pumps are disclosed in Unexamined Japanese Patent Publication Nos. 6-255474 and 2-207184. The pump disclosed in the former publication has the output shaft of its motor supported on a bearing mounted in the motor housing. The pump disclosed in the latter publication has the shaft-supporting bearing retained in a housing of the hydraulic unit (hereinafter "pump housing").

A hydraulic pump of this type has a motor output shaft inserted in a pump housing and provided with an eccentric shaft portion around which a bearing is mounted. A pair of plungers are mounted opposite to each other in the pump housing and kept in abutment with the outer periphery of the bearing. By driving the motor, the plungers are pushed, under the action of a cam, in such a direction to reduce the volume of pumping chambers. When the plungers reach their respective bottom dead centers, they are then pushed back by return springs. This action is repeated to inhale, compress and discharge fluid.

During this action, the output shaft of the motor is subjected to several to several hundred kgf of alternating loads in a direction perpendicular to the axis of the output shaft as a reaction force to the force for compressing fluid. These loads are borne by the bearing for the motor output shaft.

Ordinarily, a bearing of this type or any other bearing has one of its inner and outer rings press-fitted and the other loose-fitted to protect rolling elements (balls) retained between the inner and outer rings against damage. Thus, a gap is inevitably formed between the output shaft of the motor for driving a pump and its bearing. This gap permits whirling of the output shaft.

If in a hydraulic pressure controller the motor output shaft whirls under the influence of alternating loads that acts on the output shaft in a direction perpendicular to its axis, hammering noise will be produced at the bearing portion. Although this noise has no influence on the braking and/or slip control function, it will make the driver and passengers uncomfortable.

In the arrangement disclosed in Unexamined Japanese Patent Publication 6-255474, it is possible to reduce such hammering noise by minimizing the gap formed due to loose fitting. But to minimize this gap, the cylindrical portion provided in the motor housing to receive the bearing has to be formed with high accuracy. It is difficult to form this cylindrical portion with high accuracy by pressing. It would be too costly to form such a cylindrical portion by cutting. Also, in order to loose-fit the inner ring of the bearing, it is necessary to provide a means for preventing the inner ring from coming off, which adds to the cost of the device and the assembling steps.

In the arrangement disclosed in Unexamined Japanese Patent Publication 2-207145, the outer ring of the bearing is received in an annular groove formed by machining in the pump housing. The gap between the outer ring and the groove is filled by a resin. To assemble this pump, the bearing is firstly mounted in the pump housing first, and then the output shaft of the motor has to be press-fitted into the inner ring of the bearing, using a special jig to support the inner ring. This work is troublesome.

An object of the present invention is to provide a power pump for use in a brake pressure controller which is provided with a means for rigidly supporting the output shaft of the motor.

### SUMMARY OF THE INVENTION

According to the present invention, there is provided a power pump comprising a pump housing, a pump mounted in the pump housing for feeding fluid under pressure, a motor coupled to the pump housing for driving the pump, the motor having a motor housing for housing the motor and having an output shaft inserted in the pump housing, a pump driving member mounted on the output shaft for applying the driving force generated by the motor to the pump in a direction perpendicular to the axis of the output shaft, and a bearing provided outside of the motor housing and having an inner ring and an outer ring for supporting the output shaft of the motor, and the bearing is partially inserted in a recess formed in the motor housing and partially inserted in a hole formed in the pump housing.

Preferably, a wedge ring is press-fitted in a gap formed between an outer ring of the bearing and the hole formed in the pump housing. This wedge ring may be formed integral with the motor housing.

In this arrangement, in order to suppress whirling of the output shaft of the motor, the bearing for the output shaft of the motor is supported on the pump housing by inserting it partially into the pump housing. This make it unnecessary to fit the bearing in the motor housing with so high accuracy, so that the recess for receiving the bearing can be formed in the motor housing by an economical method such as by pressing or casting. Also, it is possible to reduce hammering noise effectively.

By press-fitting the wedge ring between the bearing and the motor housing, a stress is applied to the outer ring of the bearing, so that the play (gap) at the bearing supporting portion completely disappears. The output shaft of the motor is thus less likely to whirl, even if the hole in the pump housing for receiving the bearing is formed with not so high accuracy. Thus, hammering noise can be reduced more effectively.

By forming such a wedge ring as an integral part of the motor housing, it can be fitted more easily.

Other features and objects of the present invention will become apparent from the following description made with reference to the accompanying drawings, in which:

### BRIEF DESCRIPTION OF THE DRAWINGS

Fig. 1 is a partial sectional view of a first embodiment;
Fig. 2 is a partial sectional view of a second embodiment; and
Fig. 3 is a partial sectional view of a third embodiment.

### DETAILED DESCRIPTION OF THE PREFERRED EMBODIMENT

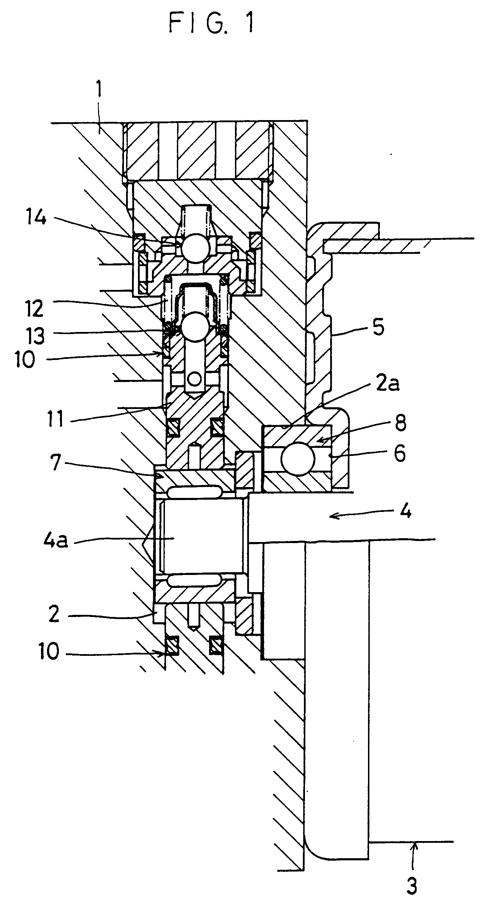

Figs. 1-3 show the power pumps according to the present invention.

Fig. 1 shows a portion of the first embodiment. The power pump of this embodiment comprises a pump housing 1, a pair of plunger pumps 10 mounted in the pump housing 1 opposite to each other, and a pump driving motor 3 coupled to the pump housing 1 by means of through bolts (not shown).

The motor 3 has its output shaft 4 inserted in a hole 2 formed in the pump housing 1. The output shaft 4 has at its tip an eccentric shaft portion 4a around which a bearing (or pump driver) 7 is mounted. To assemble, the bearing 7 is firstly mounted on the pump housing 1, and then the eccentric shaft portion 4a is inserted into the bearing 7.

The output shaft 4 is supported on a bearing 8 provided outside of the motor housing 5. The bearing 8 h as its inner ring press-fitted on the output shaft 4. Its outer ring is partially received in a recess 6 formed in a front cover of the motor housing 5, with the remaining portion thereof (which is preferably more than half the entire length of the outer ring) received in a large-diameter straight hole 2a formed at the opening end of the hole 2.

Although the outer ring of the bearing 8 is loosely fitted in the straight hole 2a, the straight hole 2a is formed with a narrow tolerance so as to minimize the gap around the outer ring of the bearing 8. The outer ring of the bearing 8 may be loosely fitted in the recess 6, so that the recess 6 can be formed easily at low cost by pressing or casting.

By supporting the bearing 8 on the pump housing 1, it is possible to restrain whirling of the output shaft 4 of the motor without the need to fit the bearing 8 in the motor housing 5 with so high accuracy. This makes it possible to suppress hammering sounds at low cost.

The plunger pumps 10 shown comprise a plunger 11, a return spring 12 for the plunger 11, an inlet valve 13 and a discharge valve 14. They are well-known pumps, so that any more detailed description thereof is omitted.

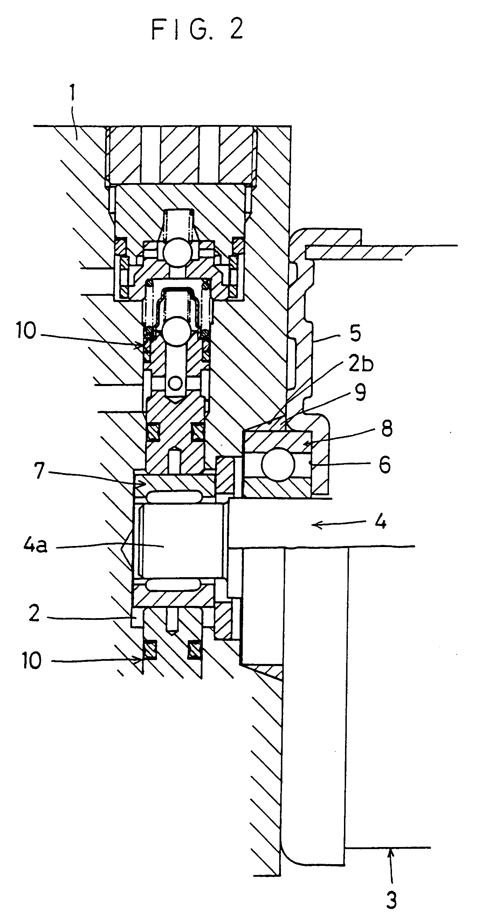

Fig. 2 shows the second embodiment. The power pump of this embodiment has a large-diameter tapered hole 2b to receive the bearing 8 at the opening end of the hole 2. A wedge ring 9 is press-fitted between the tapered hole 2b and the outer ring of the bearing 8. Otherwise, this embodiment is the same as the first embodiment shown in Fig. 1.

The wedge ring 9 may have a slit so that it can shrink smoothly. It is sized so that it can be fitted on the outer ring of the bearing 8 without exerting any undue force. By inserting the bearing 8 into the tapered hole 2b, the wedge ring 9 is pressed tightly against both the outer periphery of the outer ring of the bearing and the wall surface of the tapered hole 2b while partially protruding from the tapered hole 2b, before the bearing 8 completely fits into the hole 2b.

By further tightening the motor-coupling through bolts, the wedge ring 9 is press-fitted into the tapered hole 2b, pushed by the front cover of the motor housing 5, until the gap around the wedge ring 9 completely disappears. The output shaft of the motor is thus positively prevented from whirling, so that hammering sounds will decrease still further.

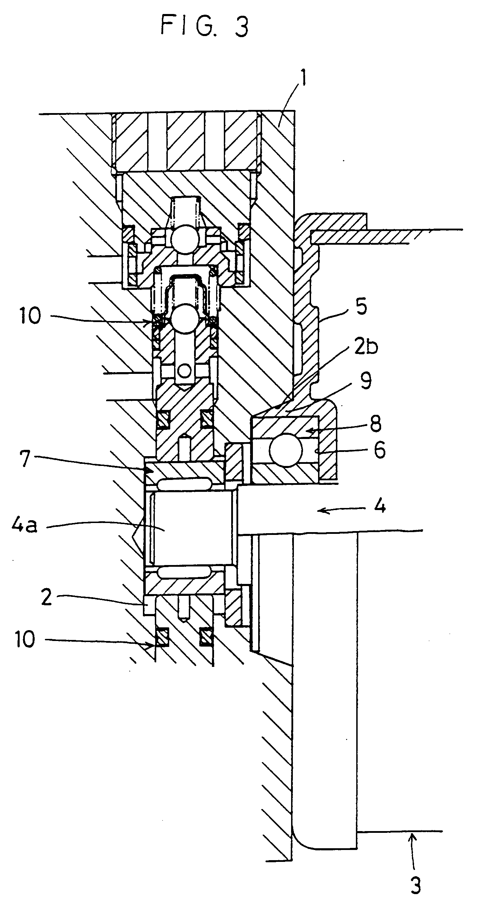

In the third embodiment shown in Fig. 3, the wedge ring 9 is integral with the front cover of the motor housing 5. Its function is the same as the wedge ring used in the second embodiment. But this wedge ring 9, integral with the motor housing, is easier to handle.

## Claims

1. A power pump comprising a pump housing, a pump mounted in said pump housing for feeding fluid under pressure, a motor coupled to said pump housing for driving said pump, said motor having a motor housing for housing said motor and having an output shaft inserted in said pump housing, a pump driving member mounted on said output shaft for applying the driving force generated by said motor to said pump in a direction perpendicular to the axis of said output shaft, and a bearing provided outside of said motor housing and having an inner ring and an outer ring for supporting said output shaft of said motor, said bearing being partially inserted in a recess formed in said motor housing and partially inserted in a hole formed in said pump housing, characterised in that a wedge ring is press-fitted in a gap formed between said outer ring of said bearing and said hole formed in said pump housing.

2. A power pump as claimed in claim 1 wherein said wedge ring is integral with said motor housing.
